# EUROPEAN PATENT APPLICATION

(11) **EP 3 369 353 A1**
(43) Date of publication of application: **05.09.2018**
(21) Application number: 17382102.6
(22) Date of filing: 01.03.2017
(51) Int. Cl.: A47J 43/07, A47J 43/08, A23G 9/12, B01F 7/00

(54) **FOOD PROCESSING APPARATUS FOR PREPARING ICE CREAM**

(71) Applicant: Taurus Research and Development S.L.U., 25790 Oliana (ES)
(72) Inventor: TRENCH ROCA, Lluís, 08650 SALLENT (ES); MONTRAVETA MONTRAVETA, Fidel, 25790 OLIANA (ES); ALET VIDAL, Josep, 25790 OLIANA (ES)
(74) Representative: Juncosa Miró, Jaime

(57) **Abstract**

The food processing apparatus for making ice cream comprises a food processing container (2) with a stirrer element (3) arranged therein which is rotatably drivable by an electric motor, and a freezing container (4) having an inner wall (6) and an outer wall (7) defining therebetween a closed chamber (8) filled with a cooling agent. The freezing container (4) is removably insertable in the food processing container (2). The freezing container (4) has a scraper element (5) arranged therein comprising a rotating shaft (15) installed through a through opening at the bottom of the freezing container (4) and connected to a scraper coupling element (9) which is couplable to the stirrer element (3) when the freezing container (4) is inserted in the food processing container (2) in an operative position.

## Description

### Field of the Art

The present invention generally relates to a food processing apparatus for making ice cream, and more particularly to a food processing apparatus provided with a freezing container for making ice cream that is removably insertable in a food processing container of the apparatus.

### Background of the Invention

Document EP 1731068 A1 discloses a food processing apparatus comprising a base unit having a drive unit including an electric motor and a food processing container having a stirrer element arranged therein. The food processing container can be removably coupled to the base unit in an operative position in which the stirrer element is coupled to the drive unit, such that the electric motor of the base unit can rotate the stirrer element of the food processing container.

Document US 2001023595 A1 describes a container useful for keeping a beverage cold, comprising an inner wall and an outer wall defining therebetween a closed chamber filled with a cooling agent. The container can be cooled in a freezer until the cooling agent freezes, and the container with the frozen cooling agent can then be used to hold a beverage and to keep the beverage cold by heat transfer between the beverage and the cooling agent through the inner wall of the container.

Document EP 1309245 A1 discloses a food processing apparatus for making ice cream comprising an electric motor, a food processing container, a stirrer element arranged in the food processing container, a freezing container that is removably insertable in the food processing container, and a scraper element rotatably arranged in the freezing container. A space filled with a mixture of water, crushed ice and salt is located between a wall of the freezing container and a wall of the food processing container such that the wall of the freezing container is in contact with the mixture of water, crushed ice and salt.

In the cited document EP 1309245 A1, the stirrer element of the food processing container is rotatably drivable by the electric motor. In one embodiment, when the freezing container is inserted in the food processing container, the freezing container is coupled to the stirrer element of the food processing container such that when the motor is activated, the freezing container rotates while the scraper element is kept stationary. In another alternative embodiment, the freezing container is kept stationary inside the food processing container while the scraper element is rotated by an auxiliary motor.

One drawback of the food processing apparatus described in the cited document EP 1309245 A1 is that for making ice cream, a prior preparation of the mixture of water, crushed ice and salt is required either by using the food processing container and the stirrer element or alternatively another container and other utensils, which entails the need to clean the food processing container and the stirrer element or the alternative container and utensils in addition to the freezing container once the making of ice cream is finished. Furthermore, the mixture of water, crushed ice and salt cannot be kept for long and must be discarded after making an ice cream and prepared again before making a new ice cream, which entails the need to have the ingredients required for preparing the mixture of water, crushed ice and salt in addition to the ingredients required for making the ice cream.

### Disclosure of the Invention

The present invention provides a food processing apparatus for making ice cream comprising an electric motor, a food processing container and a freezing container that is removably insertable in the food processing container. A stirrer element which is rotatably drivable by the electric motor is arranged in the food processing container, and a scraper element is rotatably arranged in the freezing container.

The freezing container has an inner wall and an outer wall defining therebetween a closed chamber filled with a cooling agent. The scraper element comprises a rotating shaft installed through a through opening existing at the bottom of the freezing container and the rotating shaft is connected to a scraper coupling element. The scraper coupling element is couplable to the stirrer element of the food processing container when the freezing container is inserted in the food processing container in an operative position, so the scraper element of the food processing container is rotatably drivable by the electric motor.

Thus, the freezing container can be cooled in a freezer until the cooling agent freezes, and the freezing container with the frozen cooling agent is then inserted in the food processing container in the operative position and can be filled with the ingredients required for making the ice cream. The ingredients are transformed into ice cream by heat transfer between the ingredients and the cooling agent through the inner wall of the freezing container.

The cooling agent can be, for example, a mixture of water and ammonia or a mixture of water and salt, which is in liquid state at room temperature and has a freezing point lower than the freezing point of water, i.e., lower than zero degrees.

The scraper element is used for homogenizing the ice cream as the ingredients gradually freeze and to prevent the ice cream from sticking to the inner wall of the freezing container. As a result, the rotational speed required for the scraper element is relatively slow compared to the rotational speed commonly used for the stirrer element of the food processing container.

In one embodiment, the freezing container comprises a speed reducing mechanism arranged inside a housing located on a lower side of the bottom of the freezing container. This speed reducing mechanism has an input shaft connected to the scraper coupling element and an output shaft connected to the rotating shaft of the scraper element, the rotational speed of the output shaft being slower than the rotational speed of the input shaft. Preferably, the speed reducing mechanism is an epicyclic gear train, also called a planetary gear train, in which the input shaft is coaxial with the output shaft.

Alternatively, the speed reducing mechanism can be omitted if the food processing apparatus includes control means which allow regulating the rotational speed of the electric motor driving the stirrer element of the food processing container, or if the rotational speed imparted by the electric motor to the stirrer element is suitable for the scraper element.

The through opening existing at the bottom of the freezing container comprises an inner wall opening formed in the inner wall, an outer wall opening formed in the outer wall, and an inner tubular wall attached to an edge of the inner wall opening and to an edge of the outer wall opening, so the inner tubular wall closes the chamber containing the cooling agent, assuring a leak-tightness thereof, while at the same time providing the through opening through same and through the inner and outer wall openings.

In one embodiment, the inner tubular wall extends above the bottom of the freezing container to a height determining a maximum fill level, and the scraper element comprises an outer tubular wall externally surrounding the inner tubular wall. In this embodiment, the rotating shaft has an upper end fixed to an upper end of the outer tubular wall by means of an upper connection element and inserted into the inner tubular wall of the freezing container. This assures that the ingredients for making the ice cream will not be able to spill out of the freezing container through the through opening without having to install dynamic sealing gaskets between the freezing container and the rotating shaft of the freezer element.

Preferably, the upper connection element is supported on an upper edge of the inner tubular wall and has a guiding portion that is laterally fitted to an upper portion of the inner tubular wall for guiding the rotation of the scraper element with respect to the freezing container. A knob which is susceptible to being gripped and pulled upwards for separating the scraper element from the freezing container is optionally fixed on an upper side of the upper connection element.

The food processing apparatus furthermore has a lid that is couplable to an upper opening of the food processing container in a closed position even when the freezing container is inserted in the food processing container in the operative position. The lid has a central opening and an auxiliary cover that is couplable to the central opening in a closed position. The auxiliary cover has a lower surface adjacent to an upper surface of the knob when the freezing container is inserted in the food processing container in the operative position and both the lid and the auxiliary cover are in the closed position. The auxiliary cover thereby prevents any upward movement of the freezing container inside the food processing container during the operation of the scraper element.

In one embodiment, the stirrer element of the food processing container has fixed at the upper end thereof an upper stirrer coupling element which is couplable to the scraper coupling element of the freezing container when the freezing container is inserted in the food processing container in the operative position. In an alternative embodiment, the scraper coupling element of the freezing container is configured for being directly coupled to blades or vanes of the stirrer element of the food processing container, and the upper stirrer coupling element is omitted.

Preferably, the food processing container has a wall provided with an inner surface with inner projections and the outer wall of the freezing container has outer recesses that are couplable to the inner projections of the wall of the food processing container for preventing rotation of the freezing container inside the food processing container.

In one embodiment, the freezing container has handles fixed to an upper portion of the outer wall, and the handles extend in cantilever towards an inner region of the freezing container, projecting inwardly from the inner wall. These handles are used for holding and handling the freezing container and are facing inwards so as to not interfere with the food processing container when the freezing container is inserted therein in the operative position.

Preferably, the food processing apparatus comprises a base unit provided with a casing housing a drive unit including the electric motor. The casing defines a receptacle configured for removably receiving a lower portion of the food processing container, and the stirrer element of the food processing container is couplable to the drive unit by means of a coupling device when the lower portion of the food processing container is inserted in the receptacle of the casing of the base unit in an operative position.

The drive unit comprises a drive coupling element located in the receptacle. The drive coupling element is fixed to a drive shaft rotated by the electric motor. The stirrer element comprises a rotating shaft installed through a through opening existing at the bottom of the food processing container and connected to a lower stirrer coupling element. The lower stirrer coupling element is couplable to the drive coupling element of the base unit when the lower portion of the food processing container is inserted in the receptacle in the operative position.

Optionally, the base unit comprises a heating unit positioned in relation to the receptacle, and the lower portion of the food processing container is heatable by the heating unit. The base unit preferably comprises a programmable control unit in connection with a user interface and with the drive unit and the heating unit, if there is one. The food processing container has a safety mechanism that is operable by a safety element provided in the lid of the food processing container when the lid is in the closed position.

When the lower portion of the food processing container is inserted in the receptacle in the operative position and the lid is coupled to the upper opening of the food processing container in the closed position, the safety mechanism of the food processing container interacts with the programmable control unit of the base unit to allow the operation of the drive unit and the heating unit, if there is one. Such safety mechanism is disclosed, for example, in the cited document EP 1731068 A1.

The programmable control unit can include, for example, an electronic circuit, a computer or a programmable logic controller. The user interface can include, for example, one or more buttons or pushbuttons in combination with one or more display screens or a touch screen.

### Brief Description of the Drawings

The foregoing and other features and advantages will be better understood based on the following detailed description of a merely illustrative and non-limiting embodiment with reference to the attached drawings, in which:
Figure 1 is a top plan view of a food processing apparatus for making ice cream according to an embodiment of the present invention;
Figure 2 is a cross-section view taken along plane II-II of Figure 1;
Figure 3 is a partial cross-section view taken along plane III-III of Figure 1;
Figure 4 is a perspective view of a freezing container which is part of the food processing apparatus for making ice cream;
Figure 5 is a top plan view of the freezing container;
Figure 6 is a cross-section view taken along plane VI-VI of Figure 5; and
Figure 7 is a cross-section view taken along plane VII-VII of Figure 5.

### Detailed Description of an Exemplary Embodiment

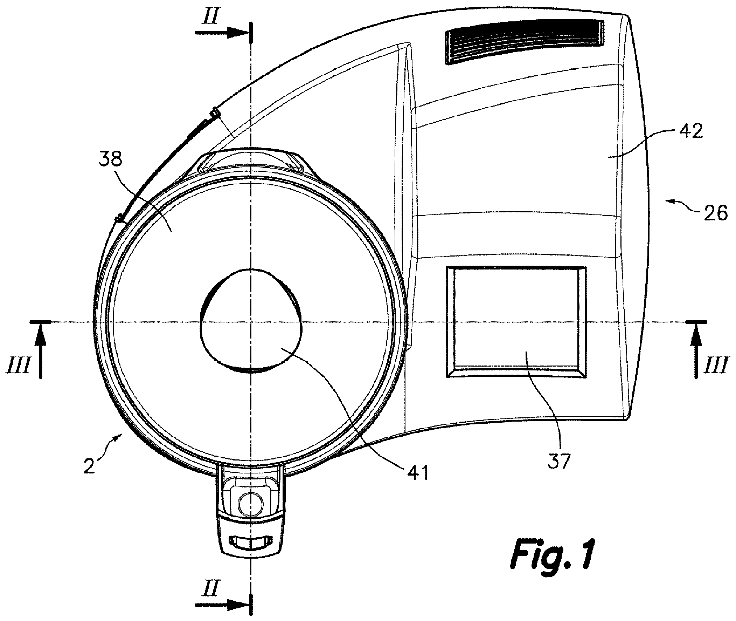

First referring to Figures 1, 2 and 3, the food processing apparatus for making ice cream of the present invention comprises, according to one embodiment, a base unit 26, a food processing container 2 and a freezing container 4.

The base unit 26 is provided with a casing 42 defining a receptacle 28 configured for removably receiving a lower portion of the food processing container 2 in an operative position. The casing 42 houses a drive unit 27 including an electric motor (not shown) and a drive coupling element 29 located in the receptacle 28. The drive coupling element 29 is fixed to a drive shaft 30 which is rotated by the electric motor by means of a mechanical transmission of which only a pulley 43 fixed to the drive shaft 30 and a transmission belt 44 coupled to the pulley 43 have been depicted.

The base unit 26 further comprises a heating unit 36 positioned in relation to the receptacle 28 and a programmable control unit in connection with a user interface 37 and with the drive unit 27 and the heating unit 36. The heating unit 36 comprises, for example, an induction heating device, and the lower portion of the food processing container 2 is heatable by electromagnetic induction generated by the heating unit 36. The user interface 37 comprises, for example, a touch screen.

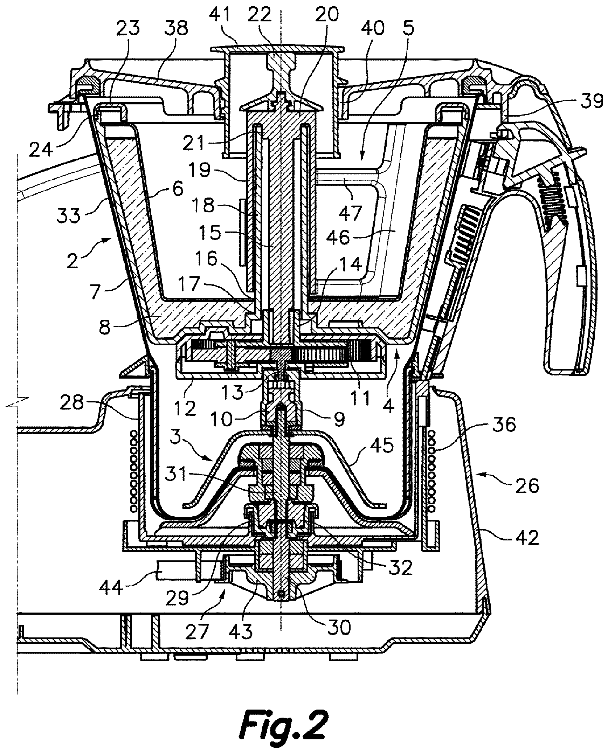

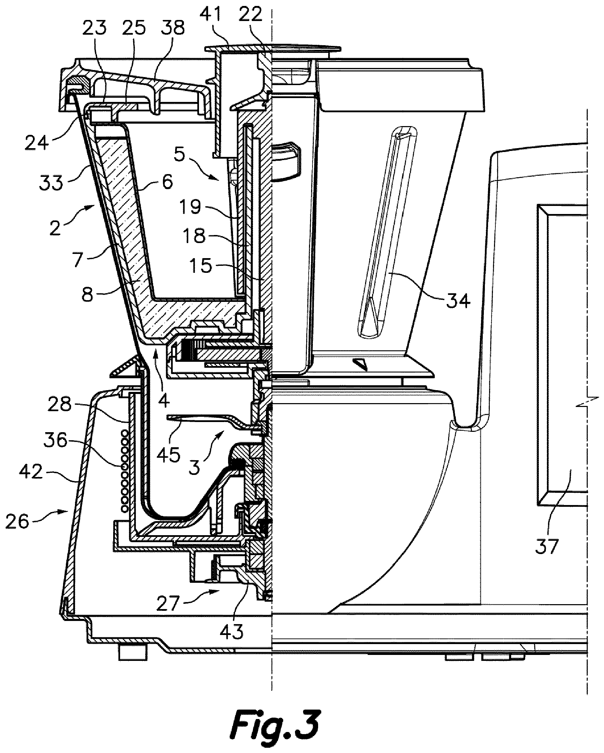

The food processing container 2 has a stirrer element 3 therein comprising blades or vanes 45 fixed to a rotating shaft 31 which is installed through a through opening existing at the bottom of the food processing container 2 and connected to a lower stirrer coupling element 32. When the lower portion of the food processing container 2 is inserted in the receptacle 28 in the operative position (Figures 2 and 3), the lower stirrer coupling element 32 of the food processing container 2 is coupled to the drive coupling element 29 of the base unit 26, such that the stirrer element 3 of the food processing container 2 is rotated by the electric motor of the base unit 26.

The food processing apparatus includes a lid 38 that is couplable to an upper opening of the food processing container 2 in a closed position. The lid has a projecting safety element 39, and the food processing container 2 includes a safety mechanism which is operated by the safety element 39 of the lid 38 when the lid 38 is in the closed position (Figures 2 and 3). The safety mechanism of the food processing container 2 interacts with the programmable control unit of the base unit 26 when the lower portion of the food processing container 2 is inserted in the receptacle 28 in the operative position and the lid 38 is in the closed position, allowing operation of the drive unit 27 and the heating unit 36.

The freezing container 4 is removably insertable in the food processing container 2, and inside the freezing container 4 there is rotatably arranged a scraper element 5 which is coupled to the stirrer element 3 of the food processing container 2 when the freezing container 4 is inserted in the food processing container 2 in an operative position (Figures 2 and 3).

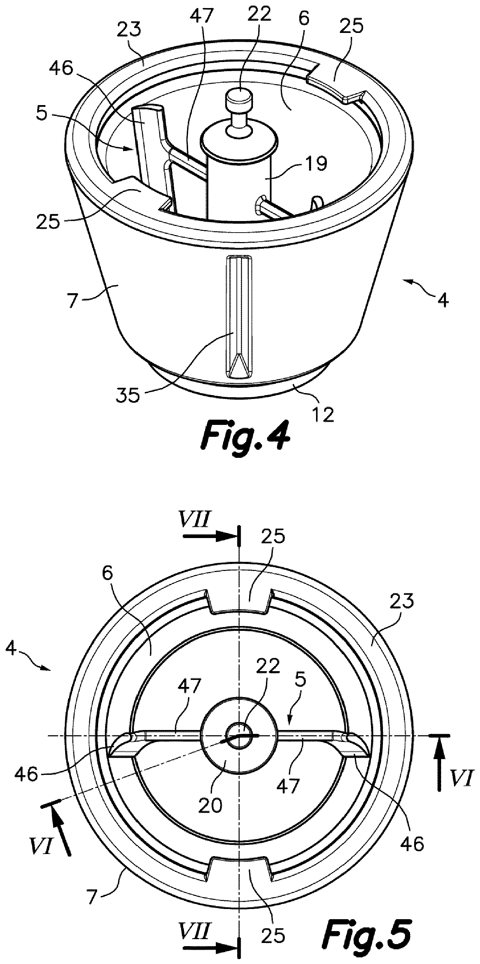

The food processing container 2 has a wall 33 provided with an inner surface with inner projections 34 (Figure 3) and the freezing container 4 has an outer wall 7 provided with an outer surface with outer recesses 35 (Figure 4) that are coupled to the inner projections 34 of the food processing container 2 for preventing rotation of the freezing container 4 in the food processing container 2 when the freezing container 4 is inserted in the food processing container 2 in the operative position.

As best shown in Figures 4 to 7, the freezing container 4 has an inner wall 6 in addition to the outer wall 7 and they define between both a closed chamber 8 filled with a cooling agent such as, for example, a mixture of water and salt or a mixture of water and ammonia, having a freezing point lower than the freezing point of water.

The scraper element 5 comprises scraper blades 46 fixed to a rotating shaft 15 which is installed through a through opening existing at the bottom of the freezing container 4, and a scraper coupling element 9 is connected to a lower end of the rotating shaft 15. The stirrer element 3 of the food processing container 2 has fixed at an upper part thereof an upper stirrer coupling element 10, and the scraper coupling element 9 of the freezing container 4 is coupled to the upper stirrer coupling element 10 of the food processing container 2 when the freezing container 4 is inserted in the food processing container 2 in the operative position (Figures 2 and 3). Thus, thee stirrer element 5 of the freezing container 4 is rotatably driven by the stirrer element 3 of the food processing container 2, which is in turn rotatably driven by the electric motor of the base unit 26.

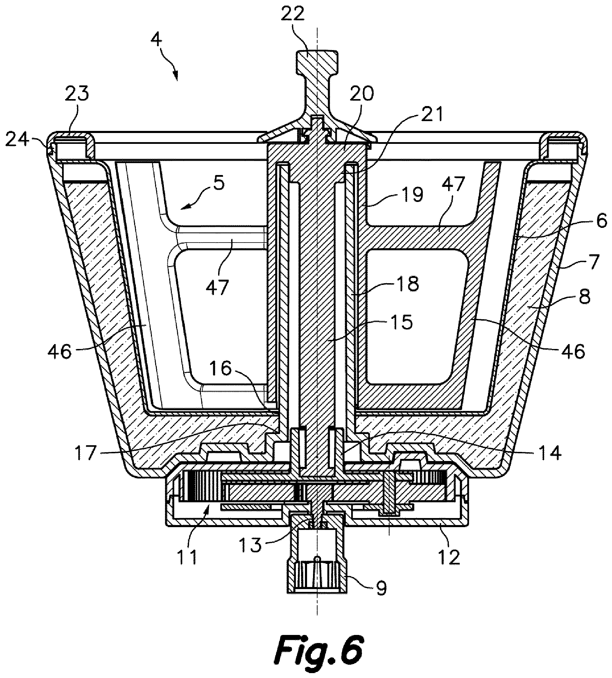

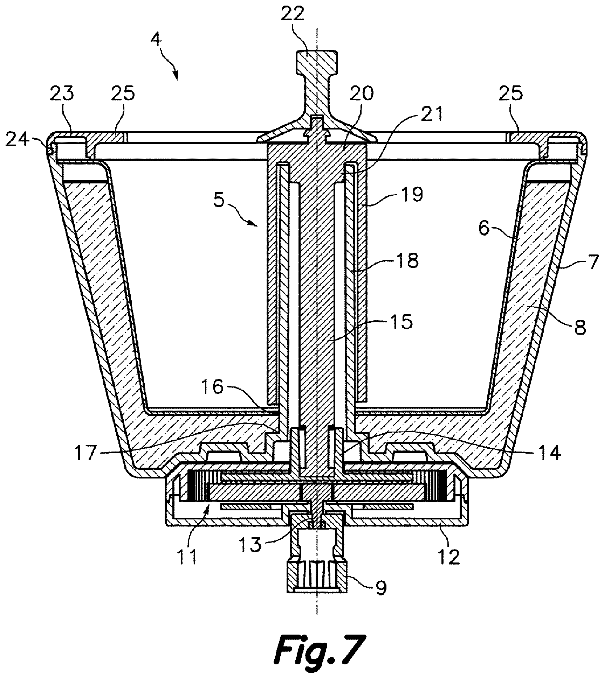

The freezing container 4 further comprises a speed reducing mechanism 11 (Figures 6 and 7) arranged inside a housing 12 located on the lower side of the bottom of the freezing container 4. The speed reducing mechanism 11 comprises an epicyclic gear train having an input shaft 13 connected to the scraper coupling element 9 and an output shaft 14 connected to the rotating shaft 15 of the scraper element 5, such that the rotating shaft 15 of the scraper element 5 is connected to the scraper coupling element 9 by means of the speed reducing mechanism 11. The input shaft 13 is coaxial with the output shaft 14, and the output shaft 14 has a rotational speed less than the rotational speed of the input shaft 13.

The through opening existing at the bottom of the freezing container 4 comprises an inner wall opening 16 formed in the inner wall 6, an outer wall opening 17 formed in the outer wall 7, and an inner tubular wall 18 attached to an edge of the inner wall opening 16 and to an edge of the outer wall opening 17, closing the chamber 8. The inner tubular wall 18 extends above the bottom of the freezing container 4 to a height determining a maximum fill level. The scraper element 5 comprises an outer tubular wall 19 externally surrounding the inner tubular wall 18, and the rotating shaft 15 is located inside the outer tubular wall 19 and has an upper end fixed to an upper end of the outer tubular wall 19 by means of an upper connection element 20.

The upper connection element 20 has the shape of a disc and is supported on an upper edge of the inner tubular wall 18. Furthermore, the upper connection element 20 has a guiding portion 21 that is laterally fitted to an upper portion of the inner tubular wall 18 for guiding the rotation of the scraper element 5 with respect to the freezing container 4. A knob 22 susceptible to being gripped and pulled upwards for separating the scraper element 5 from the freezing container 4 is fixed on an upper side of the upper connection element 20.

In the illustrated embodiment, the scraper blades 46 of the scraper element 5 are attached to the outer tubular wall 19 by means of connection arms 47, and the scraper blades 46, the connection arms 47, the outer tubular wall 19, the upper connection element 20 and the rotating shaft 15 are made of a single piece of plastic material. On the other hand, the outer wall 7 and the inner tubular wall 18 are also made of a single piece of plastic material.

As illustrated in Figures 2 and 3, the lid 38 of the food processing container 2 has a central opening 40 and an auxiliary cover 41 that is couplable to the central opening 40 in a closed position. The central opening 40 is used for adding ingredients into the food processing container 2 when the freezing container 4 is not in use. The auxiliary cover 41 has a lower surface adjacent to an upper surface of the knob 22 when the freezing container 4 is inserted in the food processing container 2 in the operative position and the lid 38 and the auxiliary cover 41 are in the closed position. Thus, the auxiliary cover 41 prevents the freezing container 4 from being able to move upwards inside the food processing container 2 during the operation of the scraper element 5.

The freezing container 4 has an upper ring 23 fixed to an upper portion 24 of the outer wall 7, and the upper ring 23 has handles 25 extending in cantilever towards an inner region of the freezing container 4. The handles 25 are used for gripping and handling the freezing container 4, and since they are facing inwards, they do not interfere with the wall 33 of the food processing container 2 when the freezing container 4 is inserted in the food processing container 2 in the operative position.

The scope of the present invention is defined in the attached claims.

## Claims

1. A food processing apparatus for making ice cream, comprising:
an electric motor;
a food processing container (2);
a stirrer element (3) arranged in said food processing container (2), said stirrer element (3) being able to be rotated by said electric motor;
a freezing container (4) that is removably insertable in the food processing container (2); and
a scraper element (5) rotatably arranged in said freezing container (4);
**characterized in that**:
the freezing container (4) has an inner wall (6) and an outer wall (7) defining therebetween a closed chamber (8) filled with a cooling agent;
said scraper element (5) comprises a rotating shaft (15) installed through a through opening existing at a bottom of the freezing container (4) and connected to a scraper coupling element (9); and
said scraper coupling element (9) is couplable to the stirrer element (3) when the freezing container (4) is inserted in the food processing container (2) in an operative position, whereby the scraper element (3) of the food processing container (2) is rotatably drivable by the electric motor.

2. The food processing apparatus according to claim 1, wherein the freezing container (4) comprises a speed reducing mechanism (11) inside a housing (12) located on a lower side of the bottom of the freezing container (4), said speed reducing mechanism (11) having an input shaft (13) connected to the scraper coupling element (9) and an output shaft (14) connected to said rotating shaft (15) of the scraper element (5).

3. The food processing apparatus according to claim 2, wherein said speed reducing mechanism (11) is an epicyclic gear train in which said input shaft (13) is coaxial with said output shaft (14).

4. The food processing apparatus according to claim 1, 2 or 3, wherein said through opening at the bottom of the freezing container (4) comprises an inner wall opening (16) formed in said inner wall (6), an outer wall opening (17) formed in said outer wall (7), and an inner tubular wall (18) attached to an edge of said inner wall opening (16) and to an edge of said outer wall opening (17), closing the chamber (8).

5. The food processing apparatus according to claim 4, wherein said inner tubular wall (18) extends above the bottom of the freezing container (4) to a height determining a maximum fill level, the scraper element (5) comprises an outer tubular wall (19) externally surrounding the inner tubular wall (18), and the rotating shaft (15) has an upper end fixed to an upper end of said outer tubular wall (19) by means of an upper connection element (20).

6. The food processing apparatus according to claim 5, wherein said upper connection element (20) is supported on an upper edge of the inner tubular wall (18) and has a guiding portion (21) that is laterally fitted to an upper portion of the inner tubular wall (18) for guiding the rotation of the scraper element (5) with respect to the freezing container (4).

7. The food processing apparatus according to claim 6, further comprising a knob (22) fixed to an upper side of the upper connection element (20), said knob (22) being susceptible to being gripped and pulled upwards for separating the scraper element (5) from the freezing container (4).

8. The food processing apparatus according to claim 7, further comprising a lid (38) that is couplable to an upper opening of the food processing container (2) in a closed position, said lid (38) has a central opening (40) and an auxiliary cover (41) that is couplable to said central opening (40) in a closed position, and said auxiliary cover (41) has a lower surface adjacent to an upper surface of the knob (22) when the freezing container (4) is inserted in the food processing container (2) in said operative position, the lid (38) is in said closed position and said auxiliary cover (41) is in said closed position.

9. The food processing apparatus according to claim 1, wherein the stirrer element (3) of the food processing container (2) has fixed thereto an upper stirrer coupling element (10) that is couplable to the scraper coupling element (9) of the freezing container (4) when the freezing container (4) is inserted in the food processing container (2) in said operative position.

10. The food processing apparatus according to claim 1, wherein the food processing container (2) has a wall (33) provided with an inner surface with inner projections (34), and the outer wall (7) of the freezing container (4) has outer recesses (35) that are couplable to said inner projections (34) for preventing rotation of the freezing container (4) in the food processing container (2).

11. The food processing apparatus according to claim 1, wherein the freezing container (4) has handles (25) fixed to an upper portion (24) of said outer wall (7) and extending in cantilever towards an inner region of the freezing container (4).

12. The food processing apparatus according to any one of claims 1 to 11, further comprising a base unit (26) provided with a casing (42) housing a drive unit (27) including the electric motor and defining a receptacle (28) configured for removably receiving a lower portion of the food processing container (2), the stirrer element (3) of the food processing container (2) being couplable to said drive unit (27) by means of a coupling device when said lower portion of the food processing container (2) is inserted in said receptacle (28) in an operative position.

13. The food processing apparatus according to claim 12, wherein the drive unit (27) comprises a drive coupling element (29) located in said receptacle (28) and fixed to a drive shaft (30) rotated by the electric motor and said stirrer element (3) comprises a rotating shaft (31) installed through a through opening existing at the bottom of the food processing container (2) and connected to a lower stirrer coupling element (32), said lower stirrer coupling element (32) being couplable to said drive coupling element (29) when the lower portion of the food processing container (2) is inserted in the receptacle (28) in said operative position.

14. The food processing apparatus according to claim 12 or 13, wherein the base unit (26) comprises a heating unit (36) positioned in relation to the receptacle (28), and said lower portion of the food processing container (2) is heatable by said heating unit (36).

15. The food processing apparatus according to claim 14, wherein the base unit (26) comprises a programmable control unit in connection with a user interface (37) and with the drive unit (27) and the heating unit (36), and the food processing container (2) has a lid (38) that is couplable to an upper opening of the food processing container (2) in a closed position and a safety mechanism that is operable by a safety element (39) of said lid (38) when the lid (38) is in said closed position, and wherein said safety mechanism of the food processing container (2) is configured for interacting with said programmable control unit of the base unit (26) when the lower portion of the food processing container (2) is inserted in the receptacle (28) in the operative position and the lid (38) is in said closed position.
